# EUROPEAN PATENT APPLICATION

(11) **EP 3 385 112 A1**
(43) Date of publication of application: **10.10.2018**
(21) Application number: 17164463.6
(22) Date of filing: 03.04.2017
(51) Int. Cl.: B60N 2/02, B60N 2/06, B64D 11/06

(54) **LONGITUDINAL ADJUSTING DEVICE FOR A VEHICLE SEAT, IN PARTICULAR FOR AN AIRLINE SEAT, AND VEHICLE SEAT, IN PARTICULAR AIRLINE SEAT**

(71) Applicant: Adient US LLC, Plymouth MI 48170 (US)
(72) Inventor: KREUTZ, Wolfgang, 66879 Reichenbach-Steegen (DE)
(74) Representative: Liedtke & Partner Patentanwälte

(57) **Abstract**

A longitudinal adjusting device (100) for a vehicle seat (1), in particular for an airline seat, the longitudinal adjusting device (100) comprising a seat track assembly (110) comprising a stationary rail (112) connectable to a base, in particular a floor, and a movable rail connectable to a seat structure of the vehicle seat (1) and slidably engaged with the stationary rail (112), and a gear drive (120) to drive the movable rail (114) relative to the stationary rail (112), the gear drive (120) comprising an electrical motor (124) and a gear mechanism, wherein the gear drive (120) is of a non-self-locking design. Furthermore the invention relates to a vehicle seat (1), in particular airline seat, comprising such an inventive longitudinal adjusting device (100).

## Description

The invention relates to a longitudinal adjusting device for a vehicle seat, in particular for an airline seat, comprising a seat track assembly comprising a stationary rail connectable to a base, in particular a floor, and a movable rail connectable to a seat structure of the vehicle seat and slidably engaged with the stationary rail, and a gear drive to drive the movable rail relative to the stationary rail, the gear drive comprising an electrical motor and a gear mechanism. The invention also relates to a vehicle seat, in particular an airline seat, comprising a longitudinal adjusting device.

### Prior art

US 4,508,386 A discloses a motor vehicle seat assembly comprising a base portion affixed to the motor vehicle, a seat portion movably attached to the base portion, and a seat adjustment mechanism operatively interposed between the seat portion and the base portion for enabling selective adjustable movement of the seat portion relative to the base portion. In order to enable a passenger's safety belt to be attached at the movable seat portion, a locking pin mechanism is provided which may be selectively activated to lock the seat portion relative to the base portion thereby to prevent relative movement therebetween. An adjustment of said vehicle seat is effected by means of electrical motors, said system further comprising delay circuit means operating to ensure that said electrical motors are actuated only after said pin locking means have been taken out of locking position, and to ensure that said pin locking means are moved to said locking position only after said electrical motors are stopped.

DE 39 09 390 A1 discloses an adjusting device on a guide element of a longitudinally adjustable vehicle seat, which can be shifted by a drive with a transmission element being interconnected. A locking device on the guide element has a catch element which can be adjusted between a release position and a catch position. The locking device provides a reliable locking of the vehicle seat.

DE 197 09 852 C2 discloses a gear drive for an automotive seat-adjustment mechanism. The position of the seat is power-adjusted by means of a gearbox coupled to a motor. The gearbox has a housing in which a worm drive engages in the motor shaft. A worm gear wheel is supported by the housing and provides a self-locking planetary gear power take-off point to an eccentric and spur gear. Self-locking in general means a self-locking gear cannot be driven in the opposite direction from its intended direction of rotation. In this case the motor can drive the seat-adjustment mechanism, but forces on the seat-adjustment mechanism cannot drive the motor.

US 6 260 922 B1 discloses a vehicle seat equipped with an adjusting device having a first adjusting element and a second adjusting element. The adjusting device is particularly suited for a length-adjustment of an underframe relative to a seat. The adjusting device has a spindle and an auxiliary spindle nut encompassing the spindle. The spindle is fastened onto the first adjusting element of the adjusting device so as to rotate in unison with it and the spindle nut is rotatably supported in the second adjusting element which is motion-linked with the first adjusting element and is forming on its outer case a worm wheel that is engaged with a worm which may be connected to a multi-turn actuation. Adjusting devices of this type are always self-locking devices in order to lock the adjusted position.

EP 0 128 111 A2 discloses a longitudinal adjusting device for vehicle seats with a power-operated adjusting device, featuring a drive unit which comprises a drive shaft and a pinion and also a toothed rack in which said pinion engages, and - with a longitudinal guide comprising two elongated, interlocking rails, which can be slid back and forth in relation to one another. One of these two rails, preferably a stationary rail, is attached to the toothed rack, and the drive unit is mounted on other of the two rails. Adjusting devices of this type are always self-locking devices in order to lock the adjusted position.

WO 2013/045104 A1 discloses a spindle drive for a motorized adjustment of an adjusting element of a vehicle, comprising a drive motor with a motor shaft, a speed reduction gear mechanism, and a feed gear mechanism, the speed reduction gear mechanism having a planetary gear mechanism and the feed gear mechanism being designed as a spindle/spindle nut gear mechanism. In a preferred embodiment the speed reduction gear mechanism is of a non-self-locking design. This allows a use of the spindle drive as a tailgate drive, in order to make a manual adjustability of the tailgate possible.

US 2004/239086A1 discloses a seat track assembly for a seat of a motor vehicle. The seat track assembly comprises a stationary rail fixedly secured to the floor. The seat track assembly also comprises a movable rail fixedly secured to the seat and slidably engaged with the stationary rail to move the seat. The movable rail extends along a length between a forward position and a rearward position. A shunt defining an elongated body extends along a portion of the length of the movable rail. A sensor is fixedly secured to the stationary rail and disposed adjacent to the shunt to produce a position signal indicating a position of the sensor relative to the shunt. The sensor and the shunt are disposed within the stationary and movable rails to be protected thereby.

### Problem

The invention is based on the problem of improving a vehicle seat of the type mentioned at the beginning, in particular of an airline seat. In particular a motor-driven longitudinally adjustable vehicle seat shall be adjustable even in the case of an electricity failure or a damage of an electrical motor of the longitudinal adjusting device.

### Solution

This problem is solved by a longitudinal adjusting device for a vehicle seat, in particular for an airline seat, comprising a seat track assembly comprising a stationary rail connectable to a base, in particular a floor, and a movable rail connectable to a seat structure of the vehicle seat and slidably engaged with the stationary rail, and
a gear drive to drive the movable rail relative to the stationary rail, the gear drive comprising an electrical motor and a gear mechanism, whereby the gear drive is of a non-self-locking design.

Owing to the fact that the gear drive is of a non-self-locking design, the vehicle seat is adjustable even in the case of an electricity failure or a damage of an electrical motor of the longitudinal adjusting device.

Advantageous embodiments, which can be used individually or in combination with each other, are the subject matter of the dependent claims.

In a preferred embodiment the movable rail is adjustable between different longitudinal positions and at least one preselected longitudinal position of the movable rail is stabilized by a position control system. The position control system preferably comprises a position sensor, wherein the position senor determines the current position of the movable rail relative to the stationary rail. The position control system preferably actuates the gear drive when the position control system determines a deviation between the current position of the movable rail determined by the position sensor and the preselected longitudinal position of the movable rail. The preselected position can be preselected by a user of the vehicle seat.

Advantageously the position control system works continuously during a normal use of the longitudinal adjusting device. The position control system can be disactivatable, in particular in case of the vehicle seat being an airline seat and the vehicle seat being in a TTL seating position, with TTL meaning Taxi Take-off Landing. In the TTL-seating position the vehicle seat must withstand high forces parallel to a direction of the seat track assembly. In the case of an airline seat the wording normal use means a seating position divergent from the TTL seating position.

The movable rail is manually movable in case of the electrical motor being in a powerless state, at least manually movable in a partial adjustment range of a longitudinal adjustment range. The partial adjustment range is preferably the longitudinal adjustment range without the longitudinal position according to the TTL-seating position. The TTL-seating position is advantageously the rearmost position of the longitudinal adjustment range.

The gear mechanism can include a spindle and a corresponding spindle nut, preferably the spindle and/or the spindle nut being arranged within the seat track assembly. Alternatively the gear mechanism comprises a pinion and a toothed rack in which said pinion engages, preferably the pinion and/or the toothed rack being arranged within the seat track assembly. Thus parts of the seat track assembly can be parts of the gear mechanism.

In a preferred embodiment the longitudinal adjusting device comprises a locking device for locking the movable rail relative to the stationary rail, in particular for locking the movable rail relative to the stationary rail in the most rearward longitudinal position. The locking device can include a locking unit and a mating component, preferably a locking bolt, lockable by the locking unit. The mating component can be a bolt or a bended wire. The locking unit can be at least indirectly connected to the stationary rail and the mating component can be at least indirectly connected to the movable rail. Indirectly means that the locking unit and/or the mating component can be connected to the stationary rail or movable rail by adapter parts, a seat structure of the vehicle seat, or a floor of the vehicle or plane. In another preferred embodiment the locking unit is at least indirectly connected to the movable rail and the mating component is at least indirectly connected to the stationary rail. Preferably each seat track assembly has its own locking unit. Preferably the longitudinal adjusting device comprises two locking units.

The problem is also solved by a vehicle seat, in particular an airline seat, comprising a longitudinal adjusting device as described above. The subject matter of the invention is independent of the seat kinematics and universally applicable to vehicle seats comprising a longitudinal adjusting device.

The vehicle seat preferably comprises a locking device for locking at least one longitudinal position of the movable rail relative to the stationary rail, in particular the most rearward longitudinal position, preferably a TTL-position. The locking unit is at least indirectly connected to the stationary rail or a vehicle floor, and the mating component is at least indirectly connected to a part of the vehicle seat, that part being movable relative to the stationary rail. That part can be a seat substructure part or a backrest of the vehicle seat.

In other words, the problem is solved in that the vehicle seat, in particular a longitudinal adjusting device of the vehicle seat, comprises one or more non-self-locking motors. Preferably the vehicle seat, in particular a longitudinal adjusting device of the vehicle seat, has a position sensor. Preferably the vehicle seat comprises a locking unit to lock the length-adjustment in TTL-position. The locking unit can comprise a manual release and/or a power activator. Preferably a control unit (position control system) controls the length position of the seat. Such an inventive vehicle seat is easy to use. In case of an electricity failure or a damage of an electrical motor the length position of the vehicle seat can be changed manually without a removal of trim parts and/or seat cushion. The longitudinal adjusting device can be lighter in comparison to known seats, because the locking device in within the flux of forces and takes most of the load from the seat track assemblies.

In the presence of electric power the vehicle seat can be moved to a memorised length position. If the seat is due to a manual movement or due to some other influences out of this memorised position, a sensor will register the difference and will drive back the vehicle seat to the memorised position. For airline seats the TTL-seating position can be achieved by an electrical motor. In the TTL-seating position the locking unit is preferably locked.

Without electric power the vehicle seat can be moved manual, till the locking unit locks the rearmost position (in particular TTL position). The locking unit can be unlocked with manual release or with a power activator.

### Figures and embodiments of the invention

The invention is explained in more detail below with reference to an advantageous exemplary embodiment which is illustrated in the figures. However, the invention is not restricted to this exemplary embodiment. In the figures:
- Fig. 1:: shows a schematic side view of the vehicle seat according to the invention in a length adjustment position deviating from a rearmost length adjustment position,
- Fig. 2:: shows a schematic side view of the vehicle seat of fig. 1 in a rearmost length adjustment position, which is locked by a locking device, and
- Fig. 3:: shows a longitudinal adjusting device of the vehicle seat.

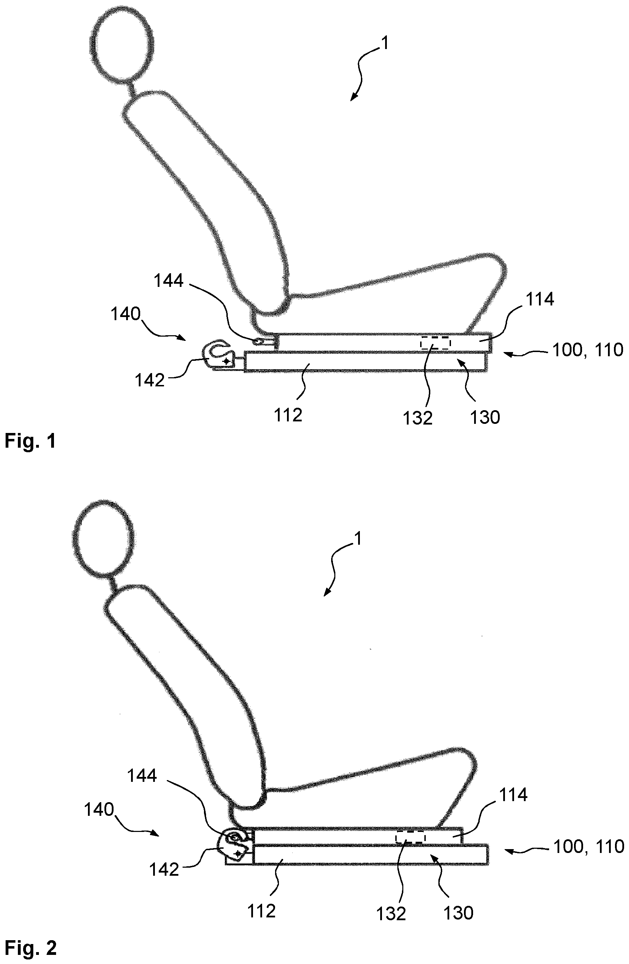

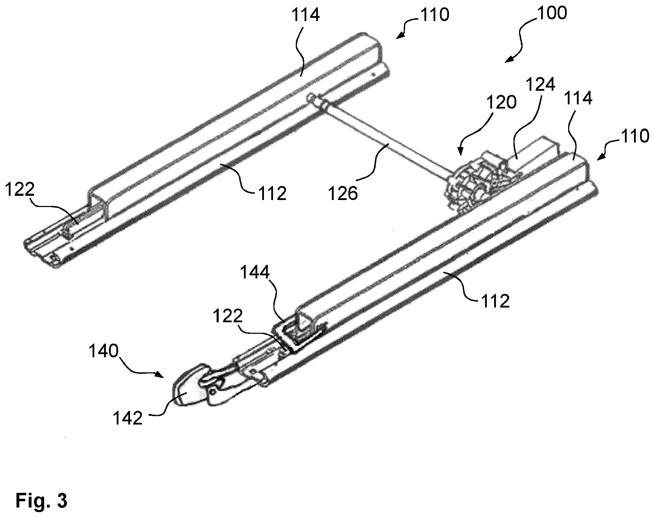

Fig. 1 and Fig. 2 show a motor-driven longitudinally adjustable vehicle seat 1 for a vehicle, in particular an airline seat for a plane. The vehicle seat 1 is equipped with a longitudinal adjusting device 100, which is shown in more detail in Fig. 3. On each side of the vehicle seat 1 the longitudinal adjusting device 100 comprises a seat track assembly 110 comprising of a stationary rail 112, connectable to a base, in particular a floor or base of the vehicle, in particular a floor or base of a plane, and a movable rail 114 connected to a seat structure. The movable rail 114 is slidably engaged with the stationary rail 112. The stationary rail 112 and the movable rail 114 both generally have a U-shape. The stationary rail 112 and the movable rail 114 fit into each other with their inward and/or outward bent marginal areas, thereby forming a closed track profile. The seat rails 112, 114 define the following directional references.

The longitudinal adjusting device 100 also comprises a toothed rack 122 firmly attached to the stationary rail 112 and extending parallel to the stationary rail 112 inside a construction space defined by the track profile. The movable rail 114 bears a pinion, which is not visible in the figures. The pinion meshes with the toothed rack 122. The toothed rack 122 and the pinion are parts of a gear drive 120. Furthermore the gear drive 120 comprises an electrical motor 124, which is connected to a pinion of each seat track assembly 110 by a driveshaft 126. The electrical motor 124 preferably comprises a speed reduction gear. For a longitudinal adjustment of the vehicle seat 1, the electrical motor 124 drives the pinions via the driveshaft 126. The toothed rack 122, the pinion and the driveshaft 126 are part of a gear mechanism. The gear mechanism and the electrical motor 124 are components of the gear drive 120.

A position control system 130 comprises a position sensor 132 and a controlling electronics which provides the electrical motor 124 with electric power. The position senor determines the current position of the movable rail 114 relative to the stationary rail 112 and actuates the gear drive 120 when the position control system 130 determines a deviation between the position of the movable rail 114 determined by the position sensor 132 and a preselected longitudinal position of the movable rail 114. A longitudinal position of the movable rail 114 can be preselected by a user of the vehicle seat 1 and is stored in the position control system 130. If the longitudinal position of the movable rail 114 determined by the position sensor 132 deviates from the preselected position, the electrical motor 124 drives the movable rail 114 in the preselected longitudinal position.

The position sensor 132 is preferably an inductive sensor, like a Hall sensor as sufficiently known from the state of the art. The position sensor 132 is preferably fixed to the movable rail 114 and detecting the stationary rail 112 or the toothed rack 122 which is firmly attached to the stationary rail 112.

Due to the fact that the gear drive 120 is of a non-self-locking design, the movable rail 114 is movable to the stationary rail 112 by applying a force to the vehicle seat 1. For example the vehicle seat 1 can be moved by pushing the seat by hand.

During the normal use of the vehicle seat 1 the position control system 130 keeps the length position, this means the position of the movable rail 114 relative to the stationary rail 112, constant. The position control system 130 actuates the gear drive 120 when the position control system 130 determines a deviation between the position of the movable rail 114 determined by the position sensor 132 and the preselected longitudinal position of the movable rail 114. The gear drive 120 drives the movable rail 114 in the preselected position.

The gear drive 120 is of a non-self-locking design. Therefore the length position of the longitudinal adjusting device 100 and thus the vehicle seat 1 is also manually adjustable. The movable rail 114 is manually movable in case of the electrical motor 124 being in a powerless state. The manual movement of the longitudinal adjusting device 100 is movable in a longitudinal adjustment range. The longitudinal adjustment range is defined as the distance between a most forward position of the longitudinal adjusting device 100 and a most rearward position of the longitudinal adjusting device 100. The most rearward position of the longitudinal adjusting device 100 itself is lockable by a locking device 140 for locking the movable rail 114 relative to the stationary rail 112. In the present embodiment only one of the two seat track assemblies 110 comprises a locking device 140.

The locking device 140 comprises a locking unit 142 being connected to the stationary rail 112, a mating component 144 being connected to the movable rail 114 and an actuator for unlocking the locking unit 142. The actuator is not visible in the figures. Optionally the locking device 140 can also be manually unlocked by a handle, but the invention is not dependent on the existence of a handle. Preferably the locking unit 142 comprises a locking pawl which is mounted so as to be pivotable about a pivot axis between an open position and a lockable closed position and which has a retention contour for securing a the mating component 144, in particular a locking bolt, in the closed position. The locking pawl can be pivoted from the open position to the closed position by a closure contour being acted upon by the mating component 144. The closed position of the locking pawl can be unlocked by the actuator. A suitable locking unit is described in WO 2016/142320 A1. But also other known locking units are suitable.

The position control system 130 is active continuously during a normal use of the vehicle seat 1 as long as a locking device 140 is unlocked. The locking device 140 preferably locks a longitudinally movement of the movable rail 114 relative to the stationary rail 112 in a rearmost position of the vehicle seat 1. When the locking device 140 is locked the position control system 130 is preferably deactivated.

In case of the vehicle seat 1 being an airline seat the rearmost position lockable by the locking device 140 is preferably a TTL seating position, with TTL meaning Taxi Take-off Landing. In the TTL seating position the vehicle seat 1 must withstand high forces parallel to the direction of the seat track assembly 110.

In the case of an electricity failure in the vehicle/plane or a damage of the electrical motor 124 the vehicle seat 1 can be moved to the rearmost position, in particular the TTL-seating position, manually by hand. The locking device 140 locks the rearmost position as soon as it is achieved.

The features disclosed in the above specification, the claims and the drawings, can be of significance both individually and in combination for the realization of the invention in its various embodiments.

### List of reference numbers

- 1: vehicle seat
- 100: longitudinal adjusting device
- 110: seat track assembly
- 112: stationary rail
- 114: movable rail
- 120: gear drive
- 122: toothed rack
- 124: electrical motor
- 126: driveshaft
- 130: position control system
- 132: position sensor
- 140: locking device
- 142: locking unit
- 144: mating component

## Claims

1. A longitudinal adjusting device (100) for a vehicle seat (1), in particular for an airline seat, the longitudinal adjusting device (100) comprising a seat track assembly (110) comprising:
- a stationary rail (112) connectable to a base, in particular a floor, and
- a movable rail (114) connectable to a seat structure of the vehicle seat (1) and slidably engaged with the stationary rail (112), and
- a gear drive (120) to drive the movable rail (114) relative to the stationary rail (112), the gear drive (120) comprising an electrical motor (124) and a gear mechanism,
**characterized in that**
the gear drive (120) is of a non-self-locking design.

2. A longitudinal adjusting device (100) as claimed in claim 1, **characterized in that** the movable rail (114) is adjustable between different longitudinal positions and at least one preselected longitudinal position of the movable rail (114) is stabilized by a position control system (130).

3. A longitudinal adjusting device (100) as claimed in claim 2, **characterized in that** the position control system (130) comprises a position sensor (132), wherein the position senor (132) determines the current position of the movable rail (114) relative to the stationary rail (112).

4. A longitudinal adjusting device (100) as claimed in claim 2 or claim 3, **characterized in that** the position control system (130) actuates the gear drive (120) in the case of the position control system (130) determines a deviation between the current position of the movable rail (114) determined by the position sensor (132) and the preselected longitudinal position of the movable rail (114).

5. A longitudinal adjusting device (100) as claimed in one of claims 1 to 4, **characterized in that** the position control system (130) works continuously during a normal use of the longitudinal adjusting device (100).

6. A longitudinal adjusting device (100) as claimed in one of claims 1 to 5, **characterized in that** the movable rail (114) is manually movable in case of the electrical motor (124) being in a powerless state.

7. A longitudinal adjusting device (100) as claimed in one of claims 1 to 6, **characterized in that** the gear mechanism comprises a toothed rack (122) and a pinion engaging the toothed rack (122), preferably the pinion and/or the toothed rack (122) being arranged within the seat track assembly (110).

8. A longitudinal adjusting device (100) as claimed in one of claims 1 to 6, **characterized in that** the gear mechanism comprises a spindle and a corresponding spindle nut, preferably the spindle and/or the spindle nut being arranged within the seat track assembly (110).

9. A longitudinal adjusting device (100) as claimed in one of claims 1 to 8, **characterized in that** the longitudinal adjusting device (100) comprises a locking device (140) for locking the movable rail (114) relative to the stationary rail (112), in particular for locking the movable rail (114) relative to the stationary rail (112), in particular in a most rearward longitudinal position.

10. A longitudinal adjusting device (100) as claimed in claim 9, **characterized in that** the locking device (140) comprises a locking unit (142) and a mating component (144), preferably a locking bolt, lockable by the locking unit (142).

11. A longitudinal adjusting device (100) as claimed in claim 10, **characterized in that** the locking unit (142) is at least indirectly connected to the stationary rail (112) and the mating component (144) is at least indirectly connected to the movable rail (114).

12. A longitudinal adjusting device (100) as claimed in claim 10, **characterized in that** the locking unit (142) is at least indirectly connected to the movable rail (114) and the mating component (144) is at least indirectly connected to the stationary rail (112).

13. A vehicle seat (1), in particular an airline seat, comprising a longitudinal adjusting device (100) as claimed in one of claims 1 to 8.

14. A vehicle seat (1) as claimed in claim 13, **characterized in that** the vehicle seat (1) comprises a locking device (140) for locking at least one longitudinal position of the movable rail (114) relative to the stationary rail (112), in particular a most rearward longitudinal position.

15. A vehicle seat (1) as claimed in claim 14, **characterized in that** the locking unit (142) is at least indirectly connected to the stationary rail (112) or a vehicle floor, and the mating component (144) is at least indirectly connected to a part of the vehicle seat (1), that part being movable relative to the stationary rail (112).
